# FASCICULE DE BREVET EUROPEEN

(11) **EP 2 191 628 B1**
(45) Date de publication et mention de la délivrance du brevet: **25.11.2015**
(21) Numéro de dépôt: 08847335.0
(22) Date de dépôt: 26.08.2008
(51) Int. Cl.: H04L 12/28

(54) **CONCENTRATEUR AUTOMATIQUE DE SOURCES POUR SYSTÈME MULTIMÉDIA**
AUTOMATISCHER QUELLENKONZENTRATOR FÜR EIN MULTIMEDIA-SYSTEM
AUTOMATIC SOURCE CONCENTRATOR FOR MULTIMEDIA SYSTEM

(30) Priorité: 28.09.2007 FR 0706810
(43) Date de publication de la demande: 02.06.2010
(73) Titulaire: PARROT AUTOMOTIVE, 75010 Paris (FR)
(72) Inventeur: BARBÉ, Christophe, F-92160 Antony (FR); HOFFMAN, Georg, F-94500 Champigny sur Marne (FR)
(74) Mandataire: Dupuis-Latour, Dominique
(86) Numéro de dépôt international: PCT/FR2008/001206
(87) Numéro de publication internationale: WO 2009/060135

(56) Documents cités:
- WO-A-2007/074245
- US-A1- 2006 112 179

## Description

L'invention concerne un procédé et un dispositif de gestion et de sélection automatique des sources numériques et/ou analogiques disponibles en entrée d'un système audio ou audio/vidéo, désigné ci-après "système multimédia).

Les systèmes multimédia modernes peuvent être raccordés à de très nombreuses sources de signal externes, aussi bien analogiques que numériques.

Le système multimédia est pourvu des diverses interfaces nécessaires au couplage à ces différentes sources. Il peut s'agir d'un couplage avec une liaison filaire et une connectique appropriée : baladeur, téléviseur ou autre source utilisant un standard de communication tel que S/PDIF (So*ny*/*Philips Digital Interconnect Format*), UPnP (*Universal Plug-and-Play*), sur Ethernet etc. Le couplage peut également être réalisé par une liaison sans fil de type *Bluetooth* (Marque déposée du SIG Bluetooth Inc.), WiFi, etc. permettant de coupler à distance le système multimédia à des sources telles que téléphone portable, ordinateur, etc.

Le US 2006/0112179 A1 décrit un système dans lequel une multitude de périphériques et de sources sont mis en réseau. Lorsque l'utilisateur choisit un contenu particulier qu'il souhaite lire, le système recherche alors la meilleure application pour lire ce contenu, et le meilleur périphérique pour le restituer. Par exemple, si l'utilisateur souhaite jouer une vidéo sur un écran de télévision, le système cherche alors s'il existe une source où ce contenu est présent en haute définition (car c'est ainsi que la restitution sera la meilleure sur un écran de télévision), quelle sera la meilleure application pour décoder un signal en provenance de cette source, etc.

La présente invention concerne un problème différent, qui est celui de la gestion d'un conflit entre plusieurs sources concurrentes simultanément actives. Après résolution du conflit la reproduction du contenu de la source sélectionnée sera effectuée de façon univoque par l'appareil, sans particulièrement chercher à en optimiser la restitution.

Habituellement, lorsque plusieurs sources se trouvent simultanément connectées à un même système multimédia l'utilisateur doit, pour sélectionner parmi ces sources celle qu'il souhaite écouter, effectuer une action ou manipulation spécifique, de manière à commander un commutateur permettant de sélectionner la source appropriée au sein du système multimédia.

Ce commutateur peut être réalisé sous différentes formes. Par exemple, sur les amplificateurs haute fidélité, il s'agit généralement d'un commutateur électrique commandé par un bouton ou des touches en façade. Sur les ordinateurs ou les systèmes pilotés par un microcontrôleur, il est généralement prévu une interface graphique spécifique, par exemple sous forme d'un menu dont l'utilisateur sélectionne l'une des rubriques pour changer la source.

Dans ces divers exemples, le dispositif ne comporte aucun automatisme particulier, et c'est à l'utilisateur d'interagir avec le système pour choisir la source.

Dans certains systèmes, des priorités sont parfois attribuées à certaines sources : par exemple dans les systèmes multimédia pour automobile, la sélection du téléphone est rendue prioritaire sur les autres sources (radio, musique, ...) en cas d'appel incident ou d'appel émis.

D'autre part, lorsque l'utilisateur couple une nouvelle source au système de lecture, certaines manipulations sont nécessaires. Si par exemple l'utilisateur connecte un baladeur au système et qu'il veut l'écouter, il doit mettre en route le baladeur, puis sélectionner sur le système l'entrée de signal correspondante.

Le WO 2007/074245 A (Seydoux) décrit un tel type de système multimédia, susceptible d'être raccordé à des sources variées, par voie filaire (connexion) ou par couplage sans fil.

Dans ce dispositif connu, la gestion des sources est opérée selon un ordre de priorité statique, la source audio *Bluetooth* ayant une priorité plus élevée que la source audio appliquée à l'entrée "ligne". Si le système lit un flux audio provenant de la source *Bluetooth,* la restitution du signal audio appliqué à l'entrée "ligne" sera inhibée tant que le flux *Bluetooth* ne sera pas interrompu. Par ailleurs, si le système est en train de lire un signal provenant d'une source connectée à l'entrée "ligne", cette source sera systématiquement interrompue en cas d'apparition d'un flux *Bluetooth* incident.

Le but de l'invention est de proposer un procédé et un dispositif permettant de réduire ces diverses manipulations, de manière à rendre plus facile l'utilisation d'un système multimédia, sans qu'il soit besoin pour l'utilisateur de sélectionner explicitement la source, ni de hiérarchiser les différentes sources en fonction de priorités statiques propres.

De façon générale, le but de l'invention est de proposer une technique de commutation automatique et "intelligente" entre diverses sources - simultanément actives - connectées à un dispositif multimédia, ceci sans demande explicite de l'utilisateur, ni non plus en fonction d'une priorité figée qui serait fonction d'une hiérarchie propre des différentes sources. Essentiellement, l'invention propose une technique de gestion et de sélection des sources permettant au système de réagir de façon appropriée du simple fait de l'activation/désactivation d'une source : par exemple, l'allumage d'un téléviseur par une action sur la télécommande de ce téléviseur, l'ouverture d'un téléphone équipé d'une interface *Bluetooth,* la sélection d'une chanson sur un baladeur, etc.

L'invention est basée sur l'observation du fait que, dans tous les cas, lorsqu'un nouveau flux de données en provenance d'une source externe est détecté par le système multimédia, ceci implique l'existence d'une intention de l'utilisateur : il a allumé un appareil, redirigé vers le système un flux audio provenant d'un appareil sans fil, programmé un appareil pour qu'il envoie un flux audio à un instant donné, etc.

Essentiellement, selon l'invention, comme le dispositif ne peut reproduire qu'une seule des sources, la commutation automatique repose sur l'attribution et la gestion de priorités dynamiques aux différentes sources en concurrence, ces priorités étant modifiables et évolutives en fonction du contexte.

La priorité la plus élevée à un instant donné sera ainsi attribuée à toute source commençant à envoyer des données (ce qui déclenche un début de lecture de celles-ci par le système), ceci révélant implicitement une intention de l'utilisateur, qui a allumé un appareil, redirigé vers le système un flux audio depuis un baladeur, etc. Les autres sources actives sont alors interrompues. La dernière source courante interrompue est, si elle le permet, mise en pause et son identifiant est conservé en mémoire pour pouvoir reprendre la lecture dès que la nouvelle source aura été désactivée, toujours sans intervention spécifique de l'utilisateur.

Plus précisément, le procédé selon l'invention comprend les étapes consistant à : a) associer à chacune des sources disponibles un identifiant de source et un indicateur d'état, l'indicateur d'état étant susceptible d'activation ou de désactivation suite à une action d'un utilisateur sur une source ; b) définir un registre contenant un identifiant de la source courante en lecture par le système ; c) définir une pile à niveaux multiples contenant une liste ordonnée de n identifiants de source, avec *n* ≥ 0, associés à des sources, autres que la source courante, mises en attente de lecture ; et d) sur activation d'une nouvelle source parmi les sources disponibles autres que la source courante, remplacer le contenu du registre par l'identifiant de ladite nouvelle source, de manière à substituer la nouvelle source à la source courante pour permettre sa lecture par le système et, concurremment, ajouter à la pile l'identifiant de la source courante, l'exécution de cette dernière étape étant commandée de manière automatique par le système, sans action appliquée par l'utilisateur au système. Avantageusement, sur désactivation de la source courante, il est prévu une étape consistant à retirer de la pile l'identifiant d'une nouvelle source conservé dans cette pile et, concurremment, à remplacer le contenu du registre par cet identifiant de source retiré de la pile, de manière à substituer cette dernière source à la source courante pour permettre sa lecture par le système, l'exécution de cette étape étant commandée de manière automatique par le système, sans action appliquée par l'utilisateur au système.

La pile peut notamment être une pile de type LIFO, où la première source retirée de la pile est celle qui y avait été la plus récemment ajoutée.

L'étape d) peut en outre comprendre, concurremment à l'ajout à la pile de l'identifiant de la source courante, la mise en pause de cette source courante, avec une discrimination du type de source, interruptible ou non, et, si la source courante est reconnue interruptible, l'émission à destination de cette source d'un signal d'interruption pour commander la suspension de celle-ci.

L'étape e) peut en outre comprendre, concurremment au retrait de la pile de l'identifiant de la nouvelle source, la reprise de cette nouvelle source et, si la nouvelle source est reconnue interruptible, l'émission à destination de cette source d'un signal d'interruption pour commander la reprise de celle-ci.

L'invention couvre également un concentrateur automatique de sources mettant en oeuvre les différentes étapes de procédé exposées ci-dessus. Ce concentrateur est couplé en entrée à une pluralité de sources numériques et/ou analogiques disponibles, et en sortie à un système de lecture audio/vidéo apte à lire une source courante sélectionnée parmi ces sources disponibles.

On va maintenant décrire un exemple de mise en oeuvre de l'invention, en référence aux dessins annexés où les mêmes références numériques désignent d'une figure à l'autre des éléments identiques ou fonctionnellement semblables.
La Figure 1 est une vue schématique d'un système audio couplé à diverses sources de signal.
La Figure 2 est un schéma par blocs des divers éléments impliqués dans la mise en oeuvre de l'invention avec le système de la Figure 1.
La Figure 3 illustre la séquence de gestion de la pile dynamique de sélection des sources, lorsqu'une nouvelle source est activée puis interrompue.
La Figure 4 est un organigramme général explicitant la mise en oeuvre du procédé de l'invention.

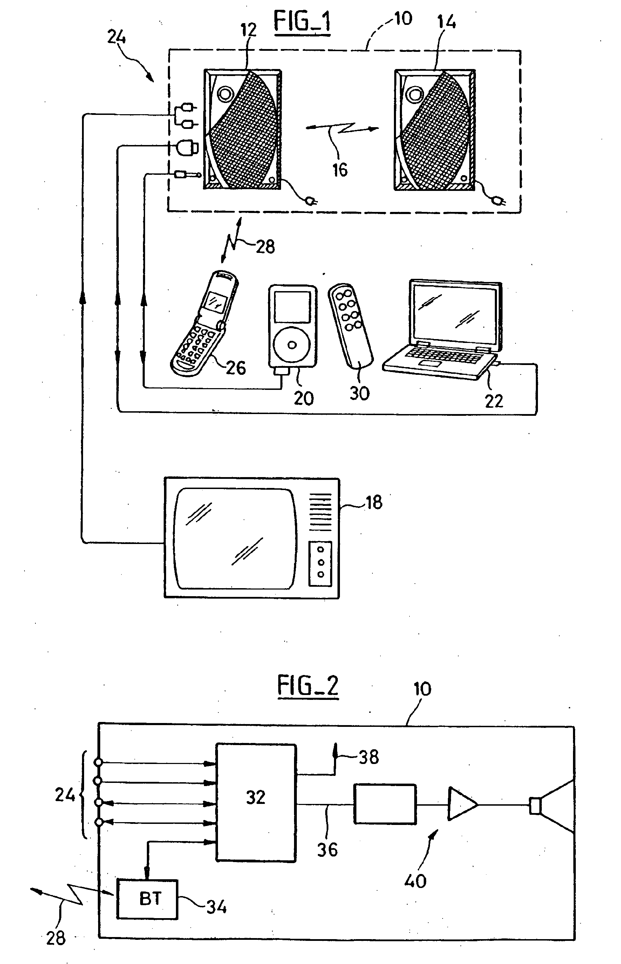

Sur la Figure 1, la référence 10 désigne de façon générale un système de reproduction audio, tel que celui décrit par exemple dans la demande WO 2007/074245 A précitée, à laquelle on pourra se référer pour plus de détails (mais l'invention peut également s'appliquer à un système multimédia audio et vidéo tel que les systèmes de "cinéma à la maison").

Le système 10 est un système de reproduction de flux audio comprenant deux enceintes acoustiques 12, 14 reliées entre elles par une liaison sans fil 16. Le système 10 peut être relié à des sources de natures très diverses, analogiques ou numériques.

On a illustré par exemple en 18 un téléviseur dont la sortie audio est reliée à une entrée "ligne" du système 10 (entrée analogique pure), en 20 un baladeur numérique relié par une connexion filaire et une connectique appropriée, ainsi qu'en 22 un ordinateur utilisé comme source audio numérique.

Pour la transmission de données audio sous forme d'un flux de données numériques, on peut avantageusement utiliser l'ensemble de protocoles UPnP (*Universal Plug-and-Play*), les données étant transmises sur un réseau câblé (Ethemet par exemple) et/ou sur un réseau sans fil (WiFi par exemple). Le système 10 de l'invention jouera alors le rôle de *Media Renderer* (au sens UPnP) permettant de récupérer et de jouer des fichiers disponibles sur un *Media Server.*

Ces diverses sources analogiques ou numériques sont reliées à des connecteurs appropriés 24 par des câbles de liaison spécifiques.

Le système 10 peut être également associé à une source audio distante par un couplage sans fil, par exemple un téléphone/baladeur MP3 référencé 26, émettant vers le système 10 un flux audio 28 selon un profil *Bluetooth* A2DP (*Advanced Audio Distribution Profile*), par exemple. D'autre part, le système 10 peut être piloté par une télécommande 30, par exemple une télécommande sans fil *Bluetooth* selon un profil AVRCP (*Audio Video Remote Control Profile*) mais cette télécommande ne participe pas à la sélection des sources selon l'invention, sélection qui est réalisée de façon automatique.

La Figure 2 explique sous forme d'un schéma par blocs fonctionnels les divers éléments contribuant à la mise en oeuvre de l'invention.

Le système 10 comprend essentiellement un concentrateur de sources 32, relié aux différents connecteurs 24 de liaison filaire et à un module *Bluetooth* 34 pour l'émission/réception de signaux en provenance et à destination des appareils couplés sans fil au système.

La sortie, unique, 36 du concentrateur 32 est reliée à une chaîne de reproduction 40 (filtres, amplificateur et haut-parleur), une liaison 38 étant prévue pour la reproduction de l'autre voie du flux audio stéréo.

Le concentrateur 32 comprend des moyens de détection de l'arrivée d'un flux audio sur chacune des entrées. Cette détection peut être opérée de manière logicielle pour les sources numériques, ou de manière matérielle, par exemple par une détection de seuil du signal, pour les sources analogiques.

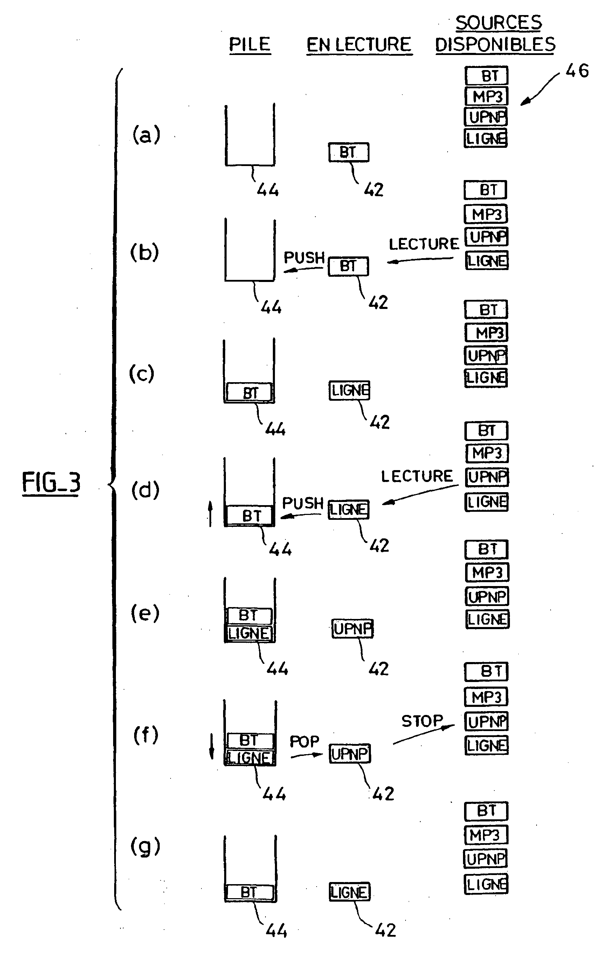

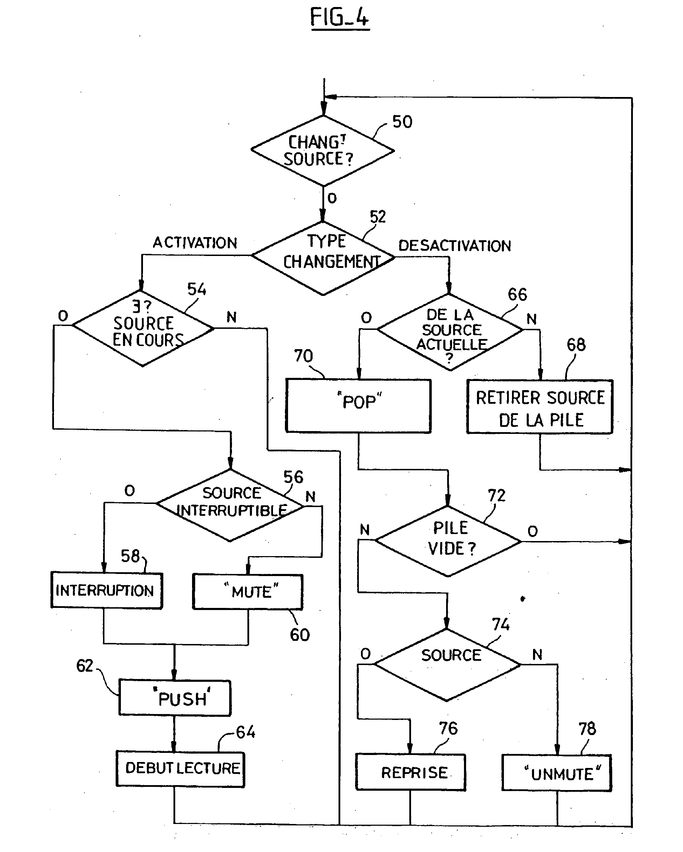

On va maintenant décrire la manière dont est mise en oeuvre le procédé de sélection des sources de l'invention au sein du concentrateur 32, en référence aux Figures 3 et 4.

Les fonctions que l'on va décrire sont avantageusement mises en oeuvre de manière logicielle par un processeur numérique tel que par exemple la puce P5+ de la société Parrot SA, Paris, France.

Chacune des sources disponibles est associée à un identifiant de source et un indicateur d'état.

L"'identifiant de source", qui correspond à chacune des entrées du concentrateur automatique de sources 32, identifie la source et son type, et comprend également un indicateur associé, spécifiant si ce type de source est interruptible ou non. Par source "interruptible", on entendra une source associée au système multimédia par un couplage bidirectionnel, de manière à pouvoir recevoir de celui-ci des signaux d'interruption ayant pour effet (i) de suspendre la délivrance du flux de données audio ou audio/vidéo, puis (ii) de reprendre la délivrance de ce flux à l'endroit où il avait été précédemment interrompu, sur envoi d'une nouvelle interruption commandant de la reprise du flux.

Parmi les sources interruptibles, on trouve les sources compatibles avec un protocole tel que UPnP, certains baladeurs MP3 de type *iPod* (Marque déposée de la Société Apple Inc.) ou autres, etc. Les sources *Bluetooth* sont interruptibles si elle supportent le profil AVRCP (*Audio Video Remote Control Profile*). Les sources WiFi sont également interruptibles.

Parmi les sources non interruptibles, on peut citer les sources interfacées avec le système multimédia selon des spécifications telles que S/PDIF, les systèmes de *streaming* ou *broadcast* audio, ou encore les sources purement analogiques connectées à une entrée "ligne" telles que téléviseur, platine tourne-disque, platine CD ou DVD, etc.

À la source est également associé un "indicateur d'état", susceptible de prendre deux états - activé ou désactivé - consécutifs à une commande externe appliquée par un utilisateur à la source en question.

La gestion des sources par le concentrateur automatique 32 est assurée par un registre 42 contenant un identifiant de la source courante, c'est-à-dire de la source de laquelle le système multimédia reçoit un flux de données et reproduit ce flux de données sur les haut-parleurs du système acoustique. Il est également prévu une pile 44 à niveaux multiples, susceptible de contenir une liste de sources interrompues mises en attente, et qui ne sont plus en lecture.

Dans l'exemple illustré Figure 3, le système multimédia est couplé à quatre sources potentiellement disponibles, à savoir une source *Bluetooth* (BT), un baladeur MP3, une source numérique sous protocole UPnP (ci-après "source UPnP") et une source branchée sur l'entrée "ligne".

Dans ce mode de réalisation, les quatre sources sont de types différents, mais l'invention est applicable aussi bien au cas de sources différentes mais de même type, par exemple avec deux sources *Bluetooth* pouvant être lues l'une ou l'autre. Le fait d'avoir dans le mode de réalisation décrit ici des sources de types différents n'implique en aucune façon que cette particularité soit nécessaire à la mise en oeuvre de l'invention, bien au contraire l'invention peut être appliquée indépendamment du type de source.

À l'étape initiale (a) c'est la source *Bluetooth* qui est en cours de lecture. Le registre 42 contient donc l'identifiant de cette source.

A l'étape (b), le concentrateur détecte l'activation de la source sur l'entrée "ligne", par exemple suite au raccordement d'une platine CD et à l'activation du bouton de lecture de cette platine. Sur cette détection, la source *Bluetooth* est mise en pause (s'agissant d'une source interruptible, le concentrateur peut lui envoyer un signal commandant la suspension du flux de données qu'elle émet), et l'identifiant de cette source *Bluetooth* mise en pause est chargé dans la pile 44 (fonction PUSH).

La situation est alors celle illustrée à l'étape (c), le flux audio reproduit étant alors celui délivré sur l'entrée "ligne".

A l'étape (d), une autre source est activée, par exemple la source "UPnP". La situation résultante est celle illustrée à l'étape (e). On notera que dans la pile 44 sont stockés les identifiants des deux sources précédemment utilisées et interrompues, à savoir les sources *Bluetooth* et "ligne". L'étape (f) illustre le cas où la source en cours de lecture (c'est-à-dire la source "UPnP") vient à être arrêtée.

Le contenu du registre 42 est alors substitué par l'identifiant chargé en dernier lieu dans la pile 44 (il s'agit d'une pile de type "dernier entré/premier sorti" ou LIFO), qui est déchargé de la pile (fonction POP).

La situation est alors celle illustrée à l'étape (g), qui est identique à celle de l'étape (c), c'est-à-dire avec reprise de la restitution du flux de données appliquées à l'entrée "ligne", et la source *Bluetooth* restant en attente et prête à être réactivée lorsque la source" ligne" sera arrêtée.

Le scénario que l'on vient de donner en exemple ci-dessus peut être répété avec n'importe quelle autre des sources disponibles 46. L'organigramme de la Figure 4 explique de façon générale la manière de procéder de l'invention pour gérer la sélection automatique des diverses sources.

Lorsqu'un changement d'état - activation/désactivation - est détecté (étape 50) sur l'une quelconque des sources couplées au système, le type de changement est analysé (étape 52).

S'il s'agit d'une activation, l'algorithme examine s'il existe déjà, ou non, une source en cours de lecture (étape 54).

Dans l'affirmative, selon qu'il s'agit d'une source interruptible ou non (étape 56), la source est interrompue par envoi d'un signal d'interruption correspondant (étape 58) ou, respectivement, ignorée, c'est-à-dire simplement rendue muette (étape 60, fonction MUTE).

La source ainsi interrompue ou ignorée voit son identifiant chargé dans la pile (étape 62, fonction PUSH), et le système commence alors la lecture de la source nouvellement activée (étape 64). En l'absence de source en cours de lecture, cette étape de lecture suit immédiatement le test de l'étape 54.

Si, à l'étape 52, le type de changement constaté est une désactivation de la source, l'algorithme détermine (étape 66) si cette désactivation concerne, ou non, la source actuellement en lecture.

Dans la négative, la source est simplement retirée, le cas échéant, de la pile où son identifiant se trouvait mémorisé (étape 68).

Dans l'affirmative, l'algorithme recherche dans la pile le dernier identifiant stocké (étape 70, fonction POP) ; si la pile est vide (test de l'étape 72), il est mis fin à l'algorithme, tandis que dans le cas contraire, la source dont l'identifiant a été retrouvé dans la pile est testée pour déterminer s'il s'agissait d'une source interruptible ou non (étape 74).

Dans l'affirmative, un signal d'interruption est envoyé à la source pour commander la reprise de l'envoi du flux de données qui avait été suspendu (étape 76).

Dans le cas contraire, le dispositif cesse d'ignorer la source, dont le flux de données (qui n'avait pas été suspendu car la source n'était pas interruptible) est à nouveau restitué (étape 78, fonction UNMUTE).

L'algorithme que l'on vient de décrire peut gérer les interruptions et activations de sources à plusieurs niveaux, en attribuant à chacune des sources interrompues une priorité dynamique - correspondant à son rang dans la pile -, avec gestion "intelligente" des sources.

Cette gestion des sources est de plus entièrement automatique, dans la mesure où le concentrateur de sources réagit de manière immédiate et appropriée à chaque détection d'une activation ou désactivation d'une source par l'utilisateur, sans que ce dernier n'ait à actionner une quelconque télécommande, bouton de sélection, etc., du système multimédia.

## Revendications

1. Un procédé de gestion automatique des sources numériques et/ou analogiques disponibles en entrée d'un système de lecture audio/vidéo (10), le système étant apte à lire une source courante sélectionnée parmi ladite pluralité de sources disponibles,
ce procédé étant **caractérisé par** les étapes consistant à :
a) associer à chacune des sources disponibles (18, 20, 22, 26) un identifiant de source et un indicateur d'état, l'indicateur d'état étant susceptible d'activation ou de désactivation suite à une action d'un utilisateur sur une source,
b) définir un registre contenant un identifiant de la source courante en lecture par le système,
c) définir une pile à niveaux multiples (44) apte à mémoriser une liste ordonnée de n identifiants de source, avec *n* ≥ 0, associés à des sources, autres que la source courante, mises en attente de lecture,
d) sur activation d'une nouvelle source parmi les sources disponibles autres que la source courante :
• remplacer le contenu du registre par l'identifiant de ladite nouvelle source, de manière à substituer la nouvelle source à la source courante pour permettre sa lecture par le système,
• et, concurremment, ajouter à la pile l'identifiant de la source courante,
l'exécution de cette étape étant commandée de manière automatique par le système, sans action appliquée par l'utilisateur au système.

2. Le procédé de la revendication 1, comprenant en outre l'étape consistant à :
e) sur désactivation de la source courante :
• retirer de la pile l'identifiant d'une nouvelle source conservé dans cette pile,
• et, concurremment, remplacer le contenu du registre par cet identifiant de source retiré de la pile, de manière à substituer cette dernière source à la source courante pour en permettre la lecture par le système,
l'exécution de cette étape étant commandée de manière automatique par le système, sans action appliquée par l'utilisateur au système.

3. Le procédé de la revendication 2, dans lequel la pile (44) est une pile de type LIFO, où la première source retirée de la pile est celle qui y avait été la plus récemment ajoutée.

4. Le procédé de la revendication 1, dans lequel l'étape d) comprend en outre, concurremment à l'ajout à la pile de l'identifiant de la source courante, la mise en pause de cette source courante.

5. Le procédé de la revendication 4, dans lequel la mise en pause de la source courante comprend :
• la discrimination du type de source, interruptible ou non,
• et, si la source courante est reconnue interruptible, l'émission à destination de cette source d'un signal d'interruption pour commander la suspension de celle-ci.

6. Le procédé des revendications 2 et 4 prises en combinaison, dans lequel dans lequel l'étape e) comprend en outre, concurremment au retrait de la pile de l'identifiant de la nouvelle source, la reprise de cette nouvelle source.

7. Le procédé des revendications 5 et 6 prises en combinaison, dans lequel la reprise de la nouvelle source comprend :
• si la nouvelle source est reconnue interruptible, l'émission à destination de cette source d'un signal d'interruption pour commander la reprise de celle-ci.

8. Un concentrateur automatique de sources (32), ce concentrateur étant apte à être couplé en entrée à une pluralité de sources numériques et/ou analogiques disponibles, et en sortie à un système de lecture audio/vidéo (10) apte à lire une source courante sélectionnée parmi ladite pluralité de sources disponibles, **caractérisé en ce qu'**il comprend :
- des moyens pour associer à chacune des sources disponibles (18, 20, 22, 26) un identifiant de source et un indicateur d'état, l'indicateur d'état étant susceptible d'activation ou de désactivation suite à une action d'un utilisateur sur une source,
- un registre (42) contenant un identifiant de la source courante en lecture par le système,
- une pile à niveaux multiples (44) apte à mémoriser une liste ordonnée de n identifiants de source, avec *n* ≥ 0, associés à des sources, autres que la source courante, mises en attente de lecture,
- des moyens de contrôle, commandés de manière automatique par le système sans action appliquée par l'utilisateur au système, ces moyens de contrôle étant aptes, sur activation d'une nouvelle source parmi les sources disponibles autres que la source courante, à :
• remplacer le contenu du registre par l'identifiant de ladite nouvelle source, de manière à substituer la nouvelle source à la source courante pour permettre sa lecture par le système,
• et, concurremment, ajouter à la pile l'identifiant de la source courante.

9. Le concentrateur automatique de sources de la revendication 8, dans lequel les moyens de contrôle sont également aptes, sur désactivation de la source courante, à :
• retirer de la pile l'identifiant d'une nouvelle source conservé dans cette pile,
• et, concurremment, remplacer le contenu du registre par cet identifiant de source retiré de la pile, de manière à substituer cette dernière source à la source courante pour en permettre la lecture par le système.

10. Le concentrateur automatique de sources de la revendication 9, dans lequel la pile (44) est une pile de type LIFO, où la première source retirée de la pile est celle qui y avait été la plus récemment ajoutée.

11. Le concentrateur automatique de sources de la revendication 8, dans lequel les moyens de contrôle sont également aptes, concurremment à l'ajout à la pile de l'identifiant de la source courante, à commander la mise en pause de cette source courante.

12. Le concentrateur automatique de sources de la revendication 11, comprenant en outre des moyens pour discriminer le type de source, interruptible ou non, et dans lequel les moyens de contrôle sont également aptes, si la source courante est reconnue interruptible, à émettre à destination de cette source un signal d'interruption pour commander la suspension de celle-ci.

13. Le concentrateur automatique de sources des revendications 9 et 11 prises en combinaison, dans lequel les moyens de contrôle sont également aptes, concurremment au retrait de la pile de l'identifiant de la nouvelle source, à commander la reprise de cette nouvelle source.

14. Le concentrateur automatique de sources des revendications 12 et 13 prises en combinaison, dans lequel les moyens de contrôle sont également aptes, si la nouvelle source est reconnue interruptible, à émettre à destination de cette source un signal d'interruption pour commander la reprise de celle-ci.

## Patentansprüche

1. Verfahren zur automatischen Verwaltung von digitalen und/oder analogen Quellen, die am Eingang eines Audio/Video-Lesesystems (10) verfügbar sind, wobei das System geeignet ist, eine gegenwärtige, unter den mehreren verfügbaren Quellen ausgewählte Quelle zu lesen,
wobei dieses Verfahren durch die Schritte gekennzeichnet ist, die aus Folgendem bestehen:
a) Verknüpfen einer Quellenkennung und eines Zustandsanzeigers mit jeder der verfügbaren Quellen (18, 20, 22, 26), wobei der Zustandsanzeiger nach einer Tätigkeit eines Benutzers auf einer Quelle aktiviert oder deaktiviert werden kann,
b) Definieren eines Registers, das eine Kennung der gegenwärtigen durch das System gelesenen Quelle enthält,
c) Definieren eines Stapels mit mehreren Ebenen (44), der geeignet ist, eine geordnete Liste von n Quellenkennungen zu speichern, wobei n ≥ 0, die mit anderen Quellen als der gegenwärtigen Quelle verknüpft sind, die sich in der Lesewarteschlange befinden,
d) beim Aktivieren einer neuen Quelle unter den verfügbaren Quellen, die sich von der gegenwärtigen Quelle unterscheidet:
• Ersetzen des Inhalts des Registers durch die Kennung der neuen Quelle, derart, dass die neue Quelle die gegenwärtige Quelle ersetzt, um ihr Lesen durch das System zu ermöglichen,
• und gleichzeitig Hinzufügen der Kennung der gegenwärtigen Quelle zu dem Stapel,
wobei die Ausführung dieses Schrittes durch das System auf automatische Art und Weise ohne durch den Benutzer auf das System angewandte Tätigkeit gesteuert wird.

2. Verfahren nach Anspruch 1, das ferner den Schritt aufweist, der aus Folgendem besteht:
e) bei der Deaktivierung der gegenwärtigen Quelle:
• Entfernen der Kennung einer neuen Quelle, die in dem Stapel aufbewahrt wird, von diesem Stapel,
• und gleichzeitig Ersetzen des Inhalts des Registers durch diese von dem Stapel entfernte Quellenkennung, derart, dass diese letztere Quelle die gegenwärtige Quelle ersetzt, um ihr Lesen durch das System zu ermöglichen, wobei die Ausführung dieses Schrittes automatisch durch das System ohne durch den Benutzer auf das System angewandte Tätigkeit gesteuert wird.

3. Verfahren nach Anspruch 2, wobei der Stapel (44) ein Stapel vom Typ LIFO ist, wo die erste von dem Stapel entfernte Quelle diejenige ist, die zuletzt dazu hinzugefügt wurde.

4. Verfahren nach Anspruch 1, wobei der Schritt d) ferner gleichzeitig zum Hinzufügen der Kennung der gegenwärtigen Quelle zu dem Stapel das Pausieren dieser gegenwärtigen Quelle aufweist.

5. Verfahren nach Anspruch 4, wobei das Pausieren der gegenwärtigen Quelle Folgendes aufweist:
• die Unterscheidung des unterbrechbaren oder nicht unterbrechbaren Quellentyps,
• und wenn die gegenwärtige Quelle als unterbrechbar erkannt wird, die Ausgabe eines Unterbrechungssignals an diese Quelle, um ihre Unterbrechung zu steuern.

6. Verfahren nach Anspruch 2 und 4 in Kombination, wobei der Schritt e) ferner gleichzeitig zum Entfernen der Kennung der neuen Quelle von dem Stapel die Wiederaufnahme dieser neuen Quelle aufweist.

7. Verfahren nach Anspruch 5 und 6 in Kombination, wobei die Wiederaufnahme der neuen Quelle Folgendes aufweist:
• wenn die neue Quelle als unterbrechbar erkannt wird, die Ausgabe eines Unterbrechungssignals an diese Quelle, um ihre Wiederaufnahme zu steuern.

8. Automatischer Quellenkonzentrator (32), wobei dieser Konzentrator geeignet ist, am Eingang von mehreren verfügbaren digitalen und/oder analogen Quellen und am Ausgang eines Audio/Videolesesystems (10) gekoppelt zu sein, das geeignet ist, eine gegenwärtige, unter den mehreren verfügbaren Quellen ausgewählte Quelle zu lesen, **dadurch gekennzeichnet, dass** er Folgendes aufweist:
- Mittel zum Verknüpfen einer Quellenkennung und eines Zustandsanzeigers mit jeder der verfügbaren Quellen (18, 20, 22, 26), wobei der Zustandsanzeiger nach einer Tätigkeit eines Benutzers auf einer Quelle aktiviert oder deaktiviert werden kann,
- ein Register (42), das eine Kennung der gegenwärtigen durch das System gelesenen Quelle enthält,
- einen Stapel mit mehreren Ebenen (44), der geeignet ist, eine geordnete Liste von n Quellenkennungen zu speichern, wobei n ≥ 0, die mit anderen Quellen als der gegenwärtigen Quelle verknüpft sind, die sich in der Lesewarteschlange befinden,
- Steuermittel, die durch das System automatisch und ohne durch den Benutzer auf das System angewandte Tätigkeit gesteuert werden, wobei diese Steuermittel bei der Aktivierung einer neuen Quelle unter den verfügbaren Quellen, die sich von der gegenwärtigen Quelle unterscheidet, für Folgendes geeignet sind:
• Ersetzen des Inhalts des Registers durch die Kennung der neuen Quelle, derart, dass die neue Quelle die gegenwärtige Quelle ersetzt, um ihr Lesen durch das System zu ermöglichen,
• und gleichzeitig Hinzufügen der Kennung der gegenwärtigen Quelle zu dem Stapel.

9. Automatischer Quellenkonzentrator nach Anspruch 8, wobei die Steuermittel bei der Deaktivierung der gegenwärtigen Quelle auch für Folgendes geeignet sind:
• Entfernen der Kennung einer neuen Quelle, die in dem Stapel aufbewahrt wird, von diesem Stapel,
• und gleichzeitig Ersetzen des Inhalts des Registers durch diese von dem Stapel entfernte Quellenkennung, derart, dass diese letztere Quelle die gegenwärtige Quelle ersetzt, um ihr Lesen durch das System zu ermöglichen.

10. Automatischer Quellenkonzentrator nach Anspruch 9, wobei der Stapel (44) ein Stapel vom Typ LIFO ist, wo die erste von dem Stapel entfernte Quelle diejenige ist, die zuletzt dazu hinzugefügt wurde.

11. Automatischer Quellenkonzentrator nach Anspruch 8, wobei die Steuermittel auch geeignet sind, gleichzeitig zum Hinzufügen der Kennung der gegenwärtigen Quelle zu dem Stapel das Pausieren dieser gegenwärtigen Quelle zu steuern.

12. Automatischer Quellenkonzentrator nach Anspruch 11, der ferner Mittel zum Unterscheiden des unterbrechbaren oder nicht unterbrechbaren Quellentyps aufweist, und wobei die Steuermittel auch geeignet sind, um, wenn die gegenwärtige Quelle als unterbrechbar erkannt wird, ein Unterbrechungssignal an diese Quelle auszugeben, um ihre Unterbrechung zu steuern.

13. Automatischer Quellenkonzentrator nach Anspruch 9 und 11 in Kombination, wobei die Steuermittel auch geeignet sind, um gleichzeitig zur Entfernung der Kennung der neuen Quelle von dem Stapel die Wiederaufnahme dieser neuen Quelle zu steuern.

14. Automatischer Quellenkonzentrator nach Anspruch 12 und 13 in Kombination, wobei die Steuermittel auch geeignet sind, um, wenn die neue Quelle als unterbrechbar erkannt wird, ein Unterbrechungssignal an diese Quelle auszugeben, um ihre Wiederaufnahme zu steuern.

## Claims

1. A method for automatic management of the digital and/or analog sources available at the input of an audio/video playing system (10), the system being adapted to play a current source selected among said plurality of available sources,
said method being **characterized by** the following steps:
a) associating with each available sources (18, 20, 22, 26) a source identifier and a state indicator, the state indicator being liable to activation or deactivation upon an action by a user to one source,
b) defining a register containing an identifier of the source currently played by the system,
c) defining a multi-level pile (44) adapted to memorize an ordered list of n source identifiers, with n ≥ 0, associated with sources, other than the current source, waiting to be played,
d) upon activation of a new source among the available sources other than the current source:
. replacing the content of the register by the identifier of said new source, so as to substitute the new source to the current source to allow the playing thereof by the system,
. and, concurrently, adding to the pile the identifier of the current source,
the execution of this step being automatically controlled by the system, with no action applied by the user to the system.

2. The method of claim 1, further comprising the following steps:
e) upon deactivation of the current source:
. removing from the pile the identifier of a new source stored in this pile,
. and, concurrently, replacing the content of the register by this source identifier removed from the pile, so as to substitute this latter source to the current source to allow the playing thereof by the system,
the execution of this step being automatically controlled by the system, with no action applied by the user to the system.

3. The method of claim 2, wherein the pile (44) is a LIFO-type pile, where the first source removed from the pile is that which had been the more recently added.

4. The method of claim 1, wherein step d) further comprises, concurrently to the adding to the pile of the current source identifier, the putting of this current source in pause.

5. The method of claim 4, wherein the putting of the current source in pause comprises:
• the discrimination of the source type, interruptible or not,
• and, if the current source is recognized as being interruptible, the transmission to this source of an interruption signal to control the suspension of the latter.

6. The method of claims 2 and 4 taken in combination, wherein step e) further comprises, concurrently to the removing from the pile of the new source identifier, the resuming of this new source.

7. The method of claims 5 and 6 taken in combination, wherein the resuming of the new source comprises:
• if the new source is recognized as being interruptible, the transmission to this source of an interruption signal to control the resuming of the latter.

8. An automatic source concentrator (32), said concentrator being adapted to be coupled at the input to a plurality of digital and/or analog available sources, and at the output to an audio/video playing system (10) adapted to play a current source selected among said plurality of available sources, **characterized in that** it comprises:
- means for associating with each available sources (18, 20, 22, 26) a source identifier and a state indicator, the state indicator being liable to activation or deactivation upon an action by a user to one source,
- a register (42) containing an identifier of the source currently played by the system,
- a multi-level pile (44) adapted to memorize an ordered list of n source identifiers, with n ≥ 0, associated with sources, other than the current source, waiting to be played,
- control means, automatically controlled by the system, with no action applied by the user to the system, these control means being adapted, upon activation of a new source among the available sources other than the current source:
. to replace the content of the register by the identifier of said new source, so as to substitute the new source to the current source to allow the playing thereof by the system,
. and, concurrently, to add to the pile the identifier of the current source.

9. The automatic source concentrator of claim 8, wherein the control means are also adapted, upon deactivation of the current source :
• to remove from the pile the identifier of a new source stored in this pile,
• and, concurrently, to replace the content of the register by this source identifier removed from the pile, so as to substitute this latter source to the current source to allow the playing thereof by the system.

10. The automatic source concentrator of claim 9, wherein the pile (44) is a LIFO-type pile, where the first source removed from the pile is that which had been the more recently added.

11. The automatic source concentrator of claim 8, wherein the control means are also adapted, concurrently to the adding to the pile of the current source identifier, to control the putting of this current source in pause.

12. The automatic source concentrator of claim 11, further comprising means for discriminating the source type, interruptible or not, and wherein the control means are also adapted, if the current source is recognized as being interruptible, to transmit to this source an interruption signal to control the suspension of the latter.

13. The automatic source concentrator of claims 9 to 11 taken in combination, wherein the control means are also adapted, concurrently to the removing from the pile of the new source identifier, to control the resuming of this new source.

14. The automatic source concentrator of claims 12 and 13 taken in combination, wherein the control means are also adapted, if the current source is recognized as being interruptible, to transmit to this source an interruption signal to control the suspension of the latter.
